# EUROPÄISCHE PATENTANMELDUNG

(11) **EP 1 188 466 A2**
(43) Veröffentlichungstag der Anmeldung: **20.03.2002**
(21) Anmeldenummer: 01121623.1
(22) Anmeldetag: 11.09.2001
(51) Int. Cl.: B01D 19/00, B67D 5/00

(54) **Vorrichtung und Verfahren zur Vermeidung von Gasblasen beim Transport einer Flüssigkeit durch Pumpen**

(30) Priorität: 15.09.2000 DE 10045659; 08.01.2001 DE 10100508; 18.01.2001 DE 10102142
(71) Anmelder: Singulus Technologies AG, 63796 Kahl/Main (DE)
(72) Erfinder: Sichmann, Eggo, 63571 Gelnhausen (DE); Binkowska, Patrick, 63825 Westerngrund (DE); Richter, Johannes, Dr., 64807 Dieburg (DE); Rohrmann, Reiner, 63579 Freigericht 1 (DE); Kempf, Stefan, 63755 Alzebau Albstadt (DE)
(74) Vertreter: VOSSIUS & PARTNER

(57) **Zusammenfassung**

Es wird eine Vorrichtung und ein Verfahren zur Vermeidung von Gasblasen beim Transport einer Flüssigkeit zur Verfügung gestellt. Die Vorrichtung weist einen Konditionierungsbehälter auf, in dem die Flüssigkeit durch Unterdruck entgast wird. In einem dem Konditionierungsbehälter nachgeschalteten Vorratsbehälter wird die entgaste Flüssigkeit vorzugsweise mittels einer Tauchkolbenpumpe, die bis unter die Oberfläche der Flüssigkeit eingetaucht ist, abgepumpt. Die Tauchkolbenpumpe weist einen feststehenden Kolben und einen bewegbaren Zylinder auf, wobei der Zylinder Flüssigkeit durch eine Öffnung des Kolbens hindurch in eine Auslaßleitung pumpt. Durch die Anordnung von Kolben und Zylinder in der Flüssigkeit wird das Eindringen von Gasblasen in die zu transportierende Flüssigkeit vermieden.

## Beschreibung

Die Erfindung betrifft eine Vorrichtung und ein Verfahren zur Vermeidung von Gasblasen beim Transport einer Flüssigkeit durch Pumpen und kann insbesondere bei der Entfernung von Gasblasen in viskosen Flüssigkeiten z. B. Lack oder Kleber zum Einsatz kommen.

Bevorzugt kann die Erfindung beim Oberflächenbeschichten oder Lackieren von Substraten und beim Auftragen eines Klebers auf Substrate von scheibenförmigen Informationsträgern, wie es z. B. in der US-A-5 766 359 bzw. der DE-C1-196 05 602 oder EP-A-790 081 beschrieben ist, zum Einsatz kommen.

Die US-Patente 1 180 221 und 4 662 544 und die DE-C-75 111 beschreiben unter die Oberfläche der zu fördernden Flüssigkeit eingetauchte Kolbenpumpen.

Der Erfindung liegt die Aufgabe zugrunde, eine Vorrichtung und ein Verfahren zur Verfügung zu stellen, bei dem die Entgasung aus einer Flüssigkeit, insbesondere einer hochviskosen Flüssigkeit vor der Verarbeitung der Flüssigkeit, z. B. beim Auftrag als Lack oder Kleber, zuverlässig vorgenommen werden kann.

Die Aufgabe wird bei den Merkmalen der Patentansprüche gelöst.

Bei der Lösung, geht die Erfindung von dem Grundgedanken aus, die Flüssigkeit zunächst in einem Konditionierungsbehälter bei Unterdruck (z.B. bei vorzugsweise 10 bis 100 mbar) zu konditionieren und dann die so konditionierte, entgaste Flüssigkeit in einen nachgeschalteten Behälter zu überführen, aus dem dann die Flüssigkeit zur weiteren Verwendung abgepumpt werden kann.

Vorzugsweise wird eine Tauchkolbenpumpe in einem mit entgaster Flüssigkeit gefüllten Behälter so angeordnet, daß sich der Zylinder und der Kolben der Tauchkolbenpumpe im Betrieb unterhalb der Oberfläche der Flüssigkeit befinden und somit vollständig von der Flüssigkeit bedeckt sind.

Der Kolben der Tauchkolbenpumpe ist insbesondere feststehend und mit einer durchgehenden Öffnung versehen, die mit einer Leitung zum Transport der Flüssigkeit verbunden ist. Der Zylinder ist insbesondere gegenüber dem Kolben bewegbar und mit einem Rückschlagventil versehen, so daß bei der Bewegung des Zylinders gegen die Flüssigkeit, in den Raum zwischen den Zylinder und Kolben Flüssigkeit eingelassen wird. Bei der Bewegung des Zylinders gegen den feststehenden Kolben schließt sich das Rückschlagventil, und die Flüssigkeit wird durch die Öffnung des Kolbens in eine Leitung zum Abtransport der Flüssigkeit gedrückt.

In dem Konditionierungsbehälter für die Flüssigkeit wird zumindest zeitweise, vorteilhaft jedoch während des Betriebs dauernd ein Unterdruck von vorzugsweise 10 bis 900 mbar oder sogar 10 bis 100 mbar aufrecht erhalten. Dieser Konditionierungsbehälter ist vorzugsweise beheizbar. Die Flüssigkeit wird vorzugsweise durch den Unterdruck in den Konditionierungsbehältern eingeleitet, in dem sie eine vorbestimmte Zeit verbleibt. Durch den Unterdruck und gegebenenfalls durch die Heizung vergrößern sich eventuell in der Flüssigkeit vorhandene Gasblasen, oder es bilden sich Gasblasen aus einem in der Flüssigkeit gelöstem Gas. Die so gebildeten Gasblasen verdrängen einen höheren Flüssigkeitsanteil und erhalten somit einen höheren Auftrieb, um durch die z. B. zähe Flüssigkeit relativ rasch an die Oberfläche zu gelangen. Dort werden sie durch eine Einrichtung zum Erzeugen des Unterdrucks abgesaugt. Nach der vorbestimmten Zeit wird die Verbindung zwischen dem Konditionierungsbehälter und dem Vorratsbehälter geöffnet und die Flüssigkeit kann z. B. unter dem Einfluß der Schwerkraft in den Vorratsbehälter fließen.

Vorteilhafterweise werden mittels der Erfindung weitgehend blasenfreie z. B. Lack- oder Kleberschichten erzeugt, wodurch z. B. Fehler bzw. Ausfälle z. B. bei beschichteten scheibenförmigen Substraten für CDs (Compact Discs) oder DVDs (Digital Versatile Discs ) vermieden werden können.

Das erfindungsgemäße System kann in vorteilhafter Weise zum Beispiel anstelle des Behälters 31 und der Pumpe 29 bei dem System gemäß DE-C1-196 05 602 eingesetzt werden.

Im folgenden wird die Erfindung an Hand der Zeichnungen näher erläutert. Es zeigen:
Figur 1 eine Prinzipzeichnung einer erfindungsgemäßen Ausführungsform,
Figur 2a eine vergrößerte Darstellung des Kolbens und des Zylinders gemäß Figur 1 beim Ansaugen von Flüssigkeit in den Zylinder und
Figur 2b eine vergrößerte Darstellung des Kolbens und des Zylinders gemäß Figur 1 beim Ausstoßen von Flüssigkeit aus dem Zylinder.

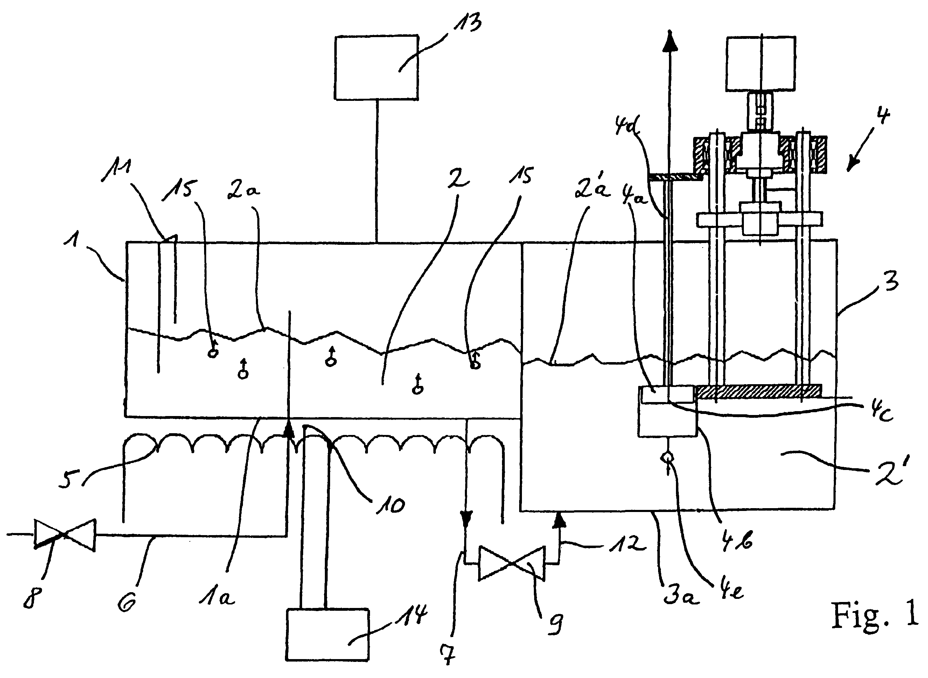

Die erfindungsgemäße Ausführungsform gemäß Figur 1 weist einen Konditionierungsbehälter 1 für die zu entgasende Flüssigkeit 2 auf, in dem mittels einer Vakuumpumpe 13 ein Unterdruck erzeugt wird und dem ein Vorratsbehälter 3 gemäß Figur 1 nachgeschaltet ist. Die Flüssigkeit 2 wird vorzugsweise unter dem Einfluss des Unterdrucks bei geöffneten Ventil 8 über die Leitung 6 in den Konditionierungsbehälter 1 gesaugt. Die Flüssigkeit verbleibt für eine vorbestimmte Zeit (z. B. 3 bis 8 Minuten) in dem Konditionierungsbehälter 1, wobei sie vorzugsweise über eine schematisch dargestellte Heizung 5 erwärmt werden kann. In der Flüssigkeit 2 enthaltene Gasblasen 15 vergrößern sich unter dem Einfluss des Unterdrucks und der Erwärmung der Flüssigkeit, erhalten einen zusätzlichen Auftrieb, verlassen die Oberfläche 2a der Flüssigkeit 2 und werden durch die Vakuumeinrichtung 13 abgesaugt. Der Füllstand im Konditionierungsbehälter 1 wird durch eine Füllstandsanzeige 11 kontrolliert. Weiterhin ist ein Temperatursensor 10 vorgesehen, der die Stromzufuhr von einer Stromquelle 14 zur Heizung 5 regelt. Nach Ablauf der vorbestimmten Zeit wird ein Ventil 9 geöffnet, und die so entgaste Flüssigkeit wird durch die Leitungen 7 und 12 unter dem Einfluss der Schwerkraft in den Vorratsbehälter 3 geleitet.

In dem Vorratsbehälter 3 für die entgaste Flüssigkeit 2' befindet sich eine Tauchkolbenpumpe 4. Diese Tauchkolbenpumpe 4 weist einen beweglichen Zylinder 4b und einen feststehenden Kolben 4a auf, die unter der Oberfläche 2a' der Flüssigkeit 2' angeordnet sind. Der Kolben 4a hat eine durchgehende Öffnung 4c, die mit einer Auslaßleitung 4d zum Transport der Flüssigkeit verbunden ist. Am Boden des Zylinders 4b ist ein Rückschlagventil 4e angeordnet. Bei der Bewegung des Zylinders 4b von dem Kolben 4a weg (in Fig. 1 nach unten), öffnet sich das Rückschlagventil 4e und läßt Flüssigkeit 2 in das Innere des Zylinders 4b. Bei der Rückwärtsbewegung, d.h. beim Bewegen des Zylinders 4b auf den feststehenden Kolben 4a zu (in Fig. 1 nach oben), schließt sich das Rückschlagventil 4c, und der Zylinder drückt Flüssigkeit durch die Öffnung 4c in die Auslaßleitung 4d. Durch die Anordnung der Tauchkolbenpumpe 4 unterhalb der Flüssigkeitsoberfläche 2a' wird das Eindringen von Gas bzw. Luftblasen durch eventuell auftretende Undichtigkeit am Kolbendichtungsring verhindert. Außerdem wird Flüssigkeit, die durch Undichtigkeiten aus dem Zylinder austreten kann, im Vorratsbehälter 3 wieder aufgefangen.

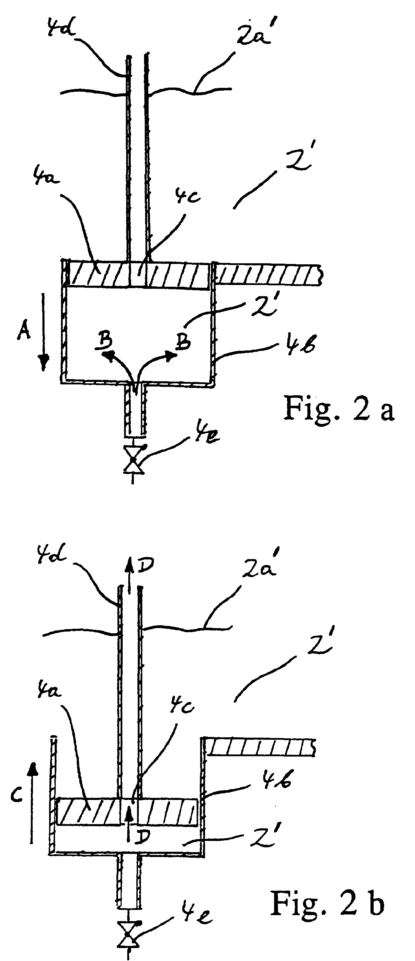

Die Figuren 2a und 2b zeigen vergrößerte Darstellungen des Kolbens und des Zylinders der Tauchkolbenpumpe in Betrieb. Gemäß Figur 2a bewegt sich der Zylinder 4b von dem feststehenden Kolben 4a in Richtung des Pfeils A weg, wobei sich das Rückschlagventil 4e öffnet und Flüssigkeit 2' in Richtung der Pfeile B in das Innere des Zylinders 4b dringt. In Figur 2b bewegt sich der Zylinder 4b in Richtung des Pfeils C auf den feststehenden Kolben 4a zu, wobei das Rückschlagventil 4e geschlossen ist und die Flüssigkeit in Richtung des Pfeils D durch die Öffnung 4c in die Auslaßleitung 4d gedrückt wird, die die Flüssigkeit einer geigneten Anwendung zuführt, z.B. einem (nicht dargestellten) Lackier- oder Kelbstoffauftragkopf zum Auftragen von Lack oder Kleber auf die Oberfläche eines Substrats.

Erfindungsgemäß wird somit zunächst die Flüssigkeit in einem Konditionierungsbehälter entgast. Durch Verwendung einer Tauchkolbenpumpe zum Transport der Flüssgkeit wird durch die besondere erfindungsgemäße Anordnung von Kolben und Zylinder unterhalb der Flüssigkeitsoberfläche eine Blasenbildung in der Flüssigkeit minimiert.

Vorzugsweise ist die Flüssigkeit ein Lack oder ein Kleber, die bei einer entsprechenden Beschichtung von Substraten für CDs oder DVDs verwendet werden können.

## Patentansprüche

1. Vorrichtung zum Entgasen eine Flüssigkeit (2) in einer Flüssigkeitstransportstrecke mit einer Zufuhrleitung (6) für die Flüssigkeit (2) zu einem Konditionierungsbehälter (1), mit einer Einrichtung (13) zum Erzeugen eines Unterdrucks in dem Konditionierungsbehälter (1) und mit einem dem Konditionierungsbehälter (1) nachgeschalteten Vorratsbehälter (3) zur Aufnahme der entgasten Flüssigkeit (2').

2. Vorrichtung nach Anspruch 1, wobei der Konditionierungsbehälter (1) eine Heizung (5) für die Flüssigkeit (2) aufweist.

3. Vorrichtung nach Anspruch 1 oder 2, wobei der Konditionierungsbehälter (1) eine Zuflußleitung (6) mit einem Ventil (8) und eine Abflußleitung (7) mit einem Ventil (9) aufweist.

4. Vorrichtung nach Anspruch 3, wobei die Zufluß- und die Abflußleitung (6) bzw. (7) am Boden (1a) des Konditionierungsbehälters (1) angeschlossen sind.

5. Vorrichtung nach einem der Ansprüche 1 bis 4, wobei der Unterdruck durch eine Vorvakuumpumpe (13) erzeugt wird.

6. Vorrichtung nach Anspruch 5, wobei die Vorvakuumpumpe als Venturidüse ausgebildet ist.

7. Vorrichtung nach Anspruch 5 oder 6, wobei der Unterdruck 10 bis 900 mbar, vorzugsweise 10 bis 100 mbar beträgt.

8. Vorrichtung nach einem der Ansprüche 1 bis 7 mit einem Temperatursensor (10) zum Regeln der Heizung (5).

9. Vorrichtung nach einem der Ansprüche 1 bis 8 mit einer Flüssigkeitsanzeige (11) in dem Konditionierungsbehälter (1) und/oder dem Vorratsbehälter (3).

10. Vorrichtung nach einem der Ansprüche 1 bis 9, wobei die Abflußleitung (7) des Konditionierungsbehälter (1) und eine Einlaßleitung (12) des Vorratsbehälters (3) über das Ventil (9) miteinander verbunden sind.

11. Vorrichtung nach einem der Ansprüche 1 bis 10 mit einer Pumpe (4) zum Abpumpen der Flüssigkeit aus dem Vorratsbehälter (3) in eine Auslaßleitung (4d).

12. Vorrichtung nach Anspruch 11, wobei die Pumpe eine Tauchpumpe, vorzugsweise eine Tauchkolbenpumpe (4) ist, deren Kolben (4a) und Zylinder (4b) im Betrieb unter die Oberfläche (2a) der Flüssigkeit (2') eingetaucht sind.

13. Vorrichtung nach Anspruch 12, wobei die Tauchkolbenpumpe (4) einen feststehenden Kolben (4a) und einen gegenüber dem Kolben (4a) bewegbaren Zylinder (4b) aufweist.

14. Vorrichtung nach Anspruch 12 oder 13, wobei der Kolben (4a) eine durchgehende Öffnung (4c) aufweist, die mit der Auslaßleitung (4d) verbunden ist.

15. Vorrichtung nach Anspruch 12, 13 oder 14, wobei der Zylinder (4b) ein Rückschlagventil (4e) aufweist, das sich öffnet und Flüssigkeit (2') in den Zylinder (4b) einläßt, wenn sich der Zylinder (4b) von dem Kolben (4a) wegbewegt, und sich schließt, wenn sich der Zylinder (4b) auf den Kolben (4a) zu bewegt, so daß die Flüssigkeit (2') im Zylinder (4b) durch die Öffnung (4c) in die Auslaßleitung (4d) gedrückt wird.

16. Vorrichtung nach Anspruch 12, 13, 14 oder 15, wobei in dem Vorratsbehälter (3) Atmosphärendruck ist.

17. Vorrichtung nach einem der 12 bis 16, wobei eine Einlaßleitung (12) des Vorratsbehälters (3) unterhalb des Flüssigkeitspegels (2a'), vorzugsweise am Boden (3a) des Vorratsbehälter (3) angeordnet ist.

18. Verfahren zum blasenfreien Pumpen einer Flüssigkeit mittels der Vorrichtung nach einem der Ansprüche 1 bis 17, mit den Schritten:
(a) Einleiten der Flüssigkeit (2) in den Konditionierungsbehälter (1),
(b) Entgasen der Flüssigkeit (2) durch Einstellen eines Unterdrucks im Konditionierungsbehälter (1),
(c) Überleiten der Flüssigkeit (2) aus dem Konditionierungsbehälter (1) in den Vorratsbehälter (3).

19. Verfahren nach Anspruch 18 mittels der Vorrichtung nach einem der Ansprüche 12 bis 17 mit einer Tauchkolbenpumpe (4) im Vorratsbehälter (3), durch Bewegen des Zylinders (4b) vom Kolben (4a) weg oder zu diesem hin, wobei sich das Rückschlagventil (4e) öffnet bzw. schließt, und Flüssigkeit (2') in den Zylinder (4b) eintritt bzw. durch die Öffnung (4c) in die Auslaßleitung (4d) gepumpt wird.

20. Verfahren nach Anspruch 18 oder 19, wobei im Verfahrensschritt (b) die Entgasung der Flüssigkeit (2) während 3 bis 8 Minuten erfolgt.

21. Verfahren nach Anspruch 18, 19 oder 20, wobei die Flüssigkeit (2) in dem Konditionierungsbehälter (1) erwärmt wird.

22. Verfahren nach Anspruch 18, 19, 20 oder 21, wobei die Flüssigkeit (2) durch Unterdruck in den Konditionierungsbehälter (1) über die Leitung (6) angesaugt wird.

23. Vorrichtung und Verfahren nach einem der Ansprüche 1 bis 17 bzw. 18 bis 22, wobei die Flüssigkeit (2) ein Lack oder ein Kleber ist.

24. Anwendung der Vorrichtung und des Verfahrens nach Anspruch 23 beim Auftragen von Lack bzw. Kleber auf ein Substrat in Form eines Informationsträgers, wie eine CD, eine DVD oder DVD-Hälfte.
